# EUROPEAN PATENT APPLICATION

(11) **EP 1 384 903 A1**
(43) Date of publication of application: **28.01.2004**
(21) Application number: 03076456.7
(22) Date of filing: 16.05.2003
(51) Int. Cl.: F16B 2/12, F16B 7/04

(54) **Jointing assembly and tubular elements for the realisation of tubular structures**

(30) Priority: 26.07.2002 IT MI20021677
(71) Applicant: PLAMAC S.p.A., 20129 MILAN (IT)
(72) Inventor: Koopmans, Lourens, 20133 Milan (IT)
(74) Representative: Coppo, Alessandro

(57) **Abstract**

A jointing assembly for tubular elements for the realisation of tubular structures comprises two parallelepiped jointing structures (12, 12'), locking means (13) of the jointing elements (12, 12') in position flipped over on each other, aligned along a longitudinal axis (17) and mutually rotated by 90°, and at least two tubular elements (11, 11') with a quadrangular section having orthogonal sides, wherein the jointing elements (12, 12') are equipped with a central body (14), with a first end (15) on which the locking means (13) acts and with a second end (16) equipped with a seat (21) for stable and precise mutual coupling, and wherein the ends (15, 16) are each equipped on different opposite sides with engagement means (28, 29, 30, 31) for the locking of the tubular elements (11, 11'), equipped on each side near to each edge with contiguous bearing zones (25') and weak zones (26'), respectively.

## Description

The present invention refers to a jointing assembly for tubular elements for the realisation of tubular structures.

Known jointing assemblies for structures are generally used to couple tubular elements with a circular section and can substantially be split into two main types. In particular, they can consist of joints which engage, for example by expansion, inside the section of tubular elements, or else they can clamp tubular elements holding them on their entire outer perimeter.

This second type of jointing assembly, very widespread for coupling tubular elements with a circular section, has substantial technical-constructive difficulties in application to tubular elements with a quadrangular section, in other words square or rectangular.

Indeed, to realise a coupling between the contact surfaces of the joint and the quadrangular perimeter of tubular elements very tight working allowances are necessary, since only a very precise coupling allows the joint to be locked with minimal clearances and to thus ensure its seal.

Moreover, jointing assemblies suitable for enclosing the entire outer perimeter of tubular elements have a substantial bulk and often also are not pleasing to the eye.

Known jointing assemblies for tubular elements are also frequently made up of a high number of components which are difficult to assemble, especially by an unspecialised user.

The purpose of the present invention is that of realising a jointing assembly for tubular elements for the realisation of tubular structures suitable for coupling tubular elements with a quadrangular section having orthogonal sides, in other words with a square or rectangular section.

Another purpose of the present invention is that of realising a jointing assembly for tubular elements for the realisation of tubular structures consisting of a low number of pieces, easily assembled together.

Another purpose is to realise a jointing assembly which allows quadrangular tubular elements with orthogonal sides to be coupled together through a clamping which is precise and stable even under a load.

Another purpose of the present invention is that of realising a jointing assembly for tubular elements for the realisation of tubular structures which is particularly simple and functional, with contained costs.

These purposes according to the present invention are accomplished by realising a jointing assembly for tubular elements for the realisation of tubular structures as outlined in claim 1.

Further characteristics are foreseen in the dependent claims.

The characteristics and advantages of a jointing assembly for tubular elements for the realisation of tubular structures according to the present invention shall become clearer from the following description, given as an example and not for limiting purposes, referring to the attached schematic drawings, in which:
Figure 1 is a perspective view of a jointing assembly for tubular elements for the realisation of tubular structures, object of the present invention, in a possible jointing configuration of two tubular elements;
Figures 2 and 3 are perspective views of a jointing element, belonging to the assembly according to the invention, seen from two opposite positions;
Figure 4 shows a section view of a jointing assembly for tubular elements for the realisation of tubular structures, according to a further jointing configuration of two tubular elements;
Figure 5 is a front view of an alternative embodiment of a tubular element of an assembly according to the invention;
Figure 6 is a perspective view of a further embodiment of a jointing element, belonging to the assembly according to the invention.

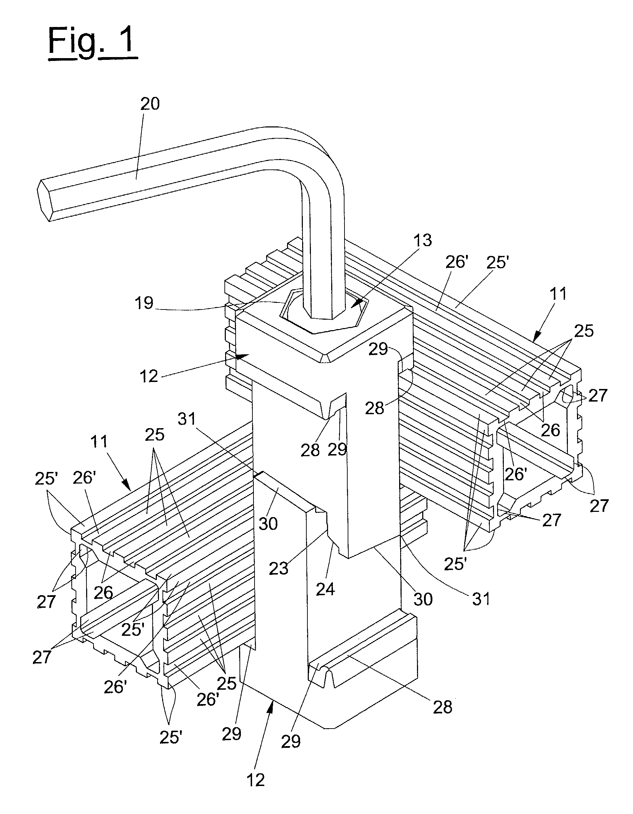

With reference to figure 1, a jointing assembly for tubular elements for the realisation of tubular structures is shown, wholly indicated with 10.

Figure 1 shows, as an example and not for limiting purposes, tubular elements 11 with a square section in a number equal to two, engaged with each other by means of a through connection, in other words not necessarily at their ends, between jointing elements 12. The jointing elements 12, object of the present invention, can, however, hold up to four tubular elements 11, possibly also with a rectangular section, not shown.

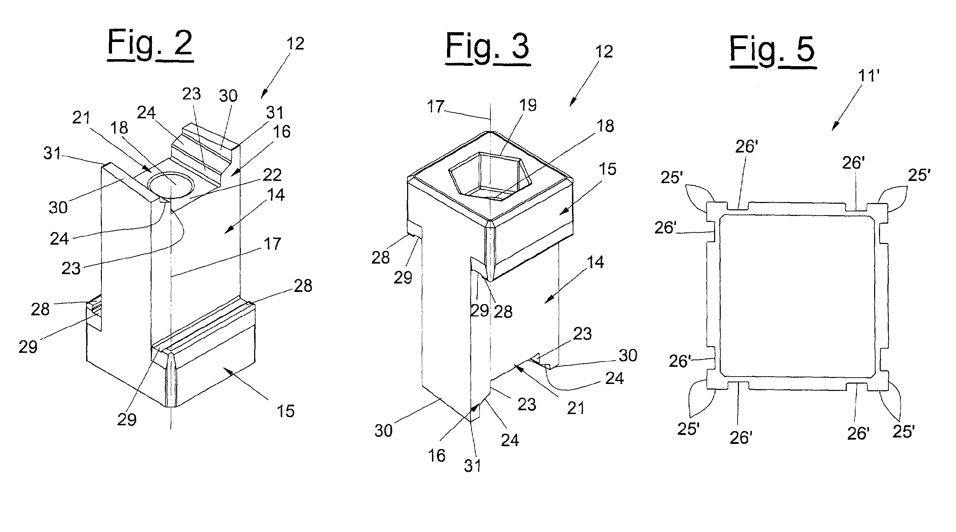

According to a preferred embodiment, illustrated as an example in the attached figures, the two jointing elements 12, shown in figures 2 and 3 from two different angles, are the same as each other and substantially parallelepiped and they are made from sintered material.

To hold the tubular elements 11, as shown in figure 1, the jointing elements 12 are locked together, for example through locking means 13 consisting of a threaded screw 13A and a nut 13B, flipped over on each other and mutually rotated by 90°.

Each jointing element 12, shown in perspective from two opposite positions in figures 2 and 3, is equipped with a central body 14, with a first end 15 equipped with engagement means for the positioning of a first tubular element 11, and with a second end 16, equipped with engagement means for the localised plastic deformation of a second tubular element 11.

The central body 14 is equipped along a longitudinal axis 17 with a through-hole 18 for the insertion of locking means 13, which act in seats 19, for example hexagonal, realised in such a first end 15 of the two jointing elements 12 to hold the nut whereas the screw is locked, for example, by means of a hexagonal key 20. The second end 16 of the jointing elements 12, on the other hand, is equipped with a seat 21 for the stable and precise coupling between the two jointing elements 12 aligned along the longitudinal axis 17 and flipped over on each other.

Such a seat 21 is U-shaped and consists of a base wall 22 with a square plan, which must be arranged perpendicular to the longitudinal axis 17 with the maximum possible precision, as well as of two side walls 23, perpendicular to such a base wall 22.

The side walls 23 are jointed to the engagement means through jointing surfaces 24 which are tilted or orthogonal with respect to them.

The tubular elements 11 are realised as extruded aluminium profiles and are equipped on their outer surface with a plurality of parallel and alternating ridges 25 and throats 26, which extend longitudinally for the whole length of the profile 11.

On each top of the tubular elements 11 the ridges 25 and the throats 26 are overall arranged in an odd number and in particular with one extra ridge with respect to the throats. In this way each edge of the tubular element 11 consists of two bearing ridges 25' belonging to converging sides. Near to each edge a bearing zone 25' is thus formed which is suitable for bearing the loads possibly transmitted by the jointing element 12.

The walls of the tubular element 11 also have weak zones in correspondence of guiding and weakening throats 26', arranged contiguous to the bearing ridges 25'. Indeed, at the guiding throats 26' the thickness of the wall of the tubular element 11 is substantially reduced, for example through the realisation of grooves 27 on the inner surface of the tubular element 11 at the four edges.

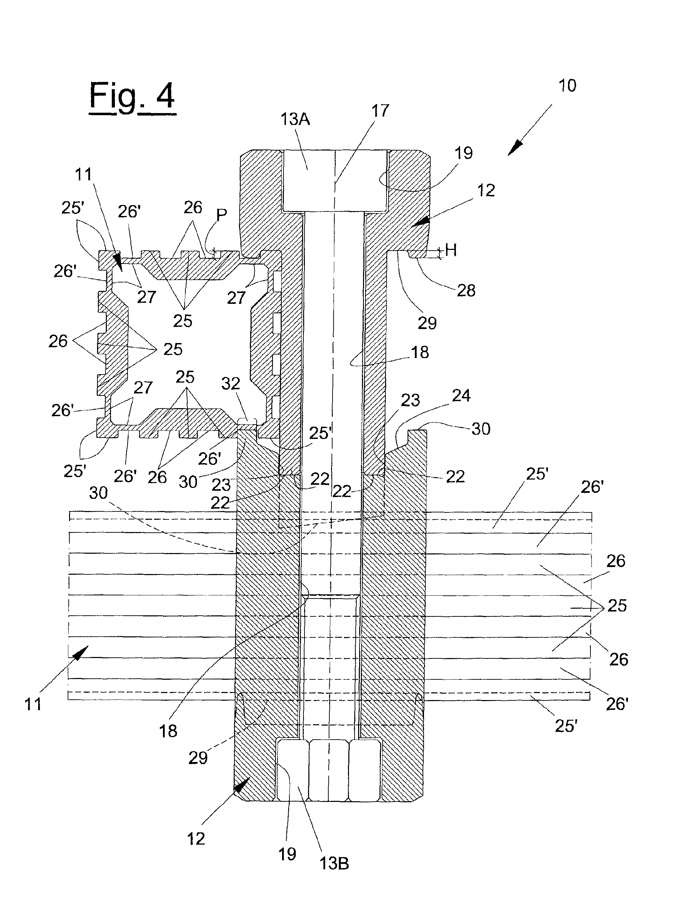

The inner grooves 27, which can be of any shape, in the case of extruded aluminium profiles 11 shown in figures 1 and 4, have jointing surfaces between the thicker portions of wall and the thinner portions of wall, tilted by 45° for the specific requirements of the extrusion process.

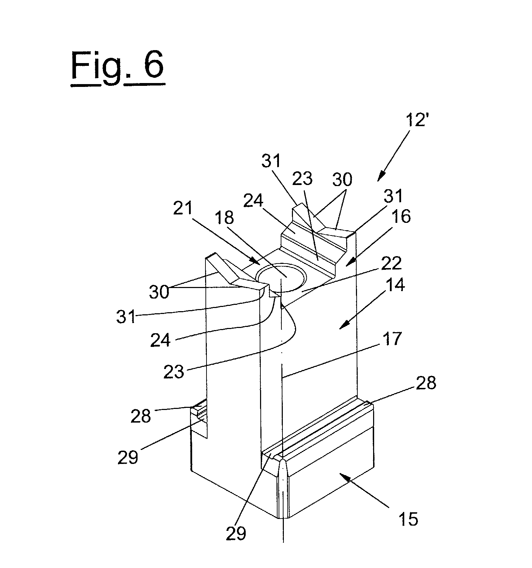

Moreover, in a simplified embodiment shown schematically in figure 5, tubular elements with a quadrangular section 11', object of the present invention, can be equipped on each side with just two bearing ridges 25' arranged at the edges and with just two guiding throats 26' contiguous to them. Even without grooves realised on the inner wall there would, in such as way, still be a bearing zone and a weak zone of the wall of the tubular element 11'.

The first end 15 of the jointing elements 12, equipped with engagement means for the positioning of the tubular elements 11, is equipped at least on one side, and preferably on two opposite sides, with a guiding ridge 28 which defines a groove 29, in which a bearing ridge 25' of the tubular element 11 can engage in abutment.

The ridge 28, which inserts in the guiding throat 26' of the tubular element 11, collaborating for its correct positioning, must nevertheless have a height H with respect to the base of the groove 29 which is less than the depth P of the throat 26', as shown schematically in the section view of figure 4.

Wedge-shaped elements 30, which constitute the engagement means for the localised plastic deformation of tubular elements 11 and which lead to a total or partial staving of the weak zone are arranged at the second end 16, on one side or on opposite sides, in any case different sides from those suitable for receiving the engagement means of the first end 15.

Figure 6 shows a further embodiment of a jointing element 12' wherein at the second end 16 two wedge-shaped elements 30, having opposite apexes 31 and lowered contiguous zones, are arranged mirror-like next to each other on each opposite side.

Further embodiments of jointing elements of an assembly according to the invention, not shown, could have wedge-shaped elements differently arranged apexes.

According to that which is shown in figure 2, if there are wedge-shaped elements 30 on opposite sides of the second end 16, these are preferably orientated with diagonally opposed apexes 31.

The jointing assembly 10 of tubular elements 11 for realising tubular structures, shown in figures 1 and 4 in two of the possible jointing configurations, foresees the possibility of locking from two to four tubular elements 11 between four pairs of interfacing engagement means. The interfacing engagement means are of different types and respectively belong to the two jointing elements 12.

In such a way each tubular elements 11 of the assembly 10 is locked on opposite sides between positioning means and deformation means. In particular, on the side facing the positioning means there is the transmission of the locking load from the groove 29 of the jointing element 12 to the bearing zone 25' of the tubular element 11. On the other hand, on the side interfacing the deformation means the wedge-shaped elements 30 of the jointing element 12 intervene on the weak zone 26' of the tubular element 11 until it knocks over the thin wall locally at the apexes 31.

Figure 4 represents a section view of the intervention of the wedge-shaped element 30 of the lower jointing element 12 in the weak zone 26' of the tubular element 11. The wedge-shaped element 30 has, indeed, locally deformed the thin wall of the weak throat 26', actually lifting a portion 32 thereof.

The assembly of the jointing assembly 10 of tubular elements 11 for realising tubular structures, object of the present invention, firstly foresees the loose assembly of the two jointing elements 12 one flipped over on the other through the locking means 13 and the positioning of the tubular elements 11 between the pairs of interfacing engagement means according to one of the many possible configurations.

Then the two jointing elements 12 are fixedly locked against each other until the U-shaped seats 21 are brought into abutment.

For the correct assembling of the assembly, object of the present invention, it is important that the height H of the guiding ridge 28 of the first end 15 of the jointing element 12 be less with respect to the depth P of the guide throat 26' of the tubular element 11, so that the transfer of the loads, with the assembly 10 locked, actually takes place only on the bearing ridge 25' and not also on the weak zone 26'.

That which is described and shown in figures 1 and 4 relative to the assembling of the jointing assembly 10 of first tubular elements 11 through first jointing elements 12 also applies with reference to the further described embodiments of tubular elements 11' and/or of jointing elements 12'.

The jointing assembly of tubular elements for realising tubular structures, object of the present invention has the advantage of being suitable for joining tubular elements arranged both on the outer perimeter of the structure itself and inside it.

Moreover, the group advantageously allows an extremely precise and stable coupling between tubular elements through constructive components which can be realised with not very restrictive allowances. Indeed, based upon the actual dimensions of the jointing elements, but above all of the tubular elements, the localised deformation of the weak zone shall be more or less accentuated, but the seal of the group is advantageously ensured also for a partial staving of the weak zone.

Moreover the realisation of bearing zones and weak zones on the tubular elements advantageously prevents possible uncontrolled deformations in other zones of the tubular element, which could weaken the structure or create an effect which is not pleasing to the eye.

The jointing assembly of tubular elements for realising tubular structures thus conceived is susceptible to numerous modifications and variants, all of which are covered by the invention. Moreover, all of the details can be replaced with technically equivalent elements. In practice, the materials used, as well as the sizes can be whatever according to the technical requirements.

## Claims

1. Jointing assembly of tubular elements for realising tubular structures, **characterised in that** it comprises two parallelepiped jointing elements (12, 12'), locking means (13) of said jointing elements (12, 12') in position flipped over on each other, aligned along a longitudinal axis (17) and mutually rotated by 90°, and at least two tubular elements (11, 11') with a quadrangular section having orthogonal sides, wherein said jointing elements (12, 12') are equipped with a central body (14), with a first end (15) on which said locking means (13) acts and with a second end (16) equipped with a seat (21) for stable and precise coupling together, said ends (15, 16) each being equipped on different opposite sides with engagement means (28, 29, 30, 31) for the locking of said at least two tubular elements (11, 11'), equipped on each side near to each edge, respectively, with bearing zones (25') and weak zones (26') contiguous to said bearing zones, said engagement means comprising positioning means (28, 29) on said bearing zones (25') and localised plastic deformation means (30, 31) of said weak zones (26'), each of said tubular elements (11, 11') being locked between a pair of said engagement means which are different from each other and respectively belonging to said two jointing elements (12, 12')

2. Assembly according to claim 1, **characterised in that** said first end (15) is equipped with said positioning means (28, 29) and **in that** said second end (16) is equipped with said localised plastic deformation means (30, 31).

3. Assembly according to claim 2, **characterised in that** said positioning means comprises a guiding ridge (28), suitable for being inserted on said weak zone (26'), which defines a groove (29) suitable for engaging in abutment under a load on said bearing zone (25').

4. Assembly according to claim 2, **characterised in that** said localised plastic deformation means comprises at least one wedge-shaped element (30), suitable for engaging on said weak zone (26') and equipped with an apex (31) for at least partially staving said weak zone (26').

5. Assembly according to claim 4, **characterised in that** said at least one wedge-shaped element (30) are two mirror-like interfacing wedge-shaped elements (30) having opposite apexes (31) and contiguous lowered zones.

6. Assembly according to claim 1, **characterised in that** said seat (21) for the stable and precise coupling together between said jointing elements (12, 12') is U-shaped and consists of a base wall (22) arranged in a plane perpendicular to said axis (17) and side walls (23) perpendicular to said base wall (22).

7. Assembly according to claim 1, **characterised in that** said bearing zones and said weak zones consist of adjacent bearing ridges (25') and weak throats (26'), wherein said ridges (25') and said throats (26') are parallel and extend longitidinally along the whole length of said tubular element (11, 11').

8. Assembly according to claim 7, **characterised in that** said tubular elements (11, 11') are equipped on their outer surface with a plurality of parallel and alternating ridges (25) and throats (26), which extend longitudinally for the whole length of said tubular element (11, 11'), wherein said ridges (25) and throats (26) are arranged on each side overall in an odd number and with said bearing ridges (25') in correspondence of edges, the ridges (25) being greater in number with respect to the throats (26).

9. Assembly according to claim 1, **characterised in that** said weak zone (26') has a small thickness and comprises grooves (27) realised on the inner surface of the tubular element (11, 11') in correspondence of the edges.

10. Assembly according to claim 3, **characterised in that** said guiding ridge (28) has a height (H) with respect to the base of said groove (29) which is less than the depth (P) of said weak zone (26').

11. Assembly according to claim 1, **characterised in that** said central body (14) is equipped along said longitudinal axis (17) with a through-hole (18) for the insertion of said locking means (13).

12. Assembly according to claim 1, **characterised in that** said tubular elements (11, 11') are extruded aluminium profiles.

13. Assembly according to claim 1, **characterised in that** said jointing elements (12, 12') are made from sintered material.
